(19) Europäisches Patentamt
European Patent Office
Office européen des brevets

(11) **EP 1 473 849 B1**

(12) **EUROPÄISCHE PATENTSCHRIFT**

(45) Veröffentlichungstag und Bekanntmachung des Hinweises auf die Patenterteilung:
**27.02.2008  Patentblatt 2008/09**

(51) Int Cl.:
*H04B 7/005* *(2006.01)*

(21) Anmeldenummer: **04017400.5**

(22) Anmeldetag: **17.05.2001**

(54) **Mobilstation zur Ermittlung der Verstärkungsfaktoren eines Datenkanals und eines Kontrollkanals eines Datenübertragungssystem**

Mobile station for determining amplification factors of a data channel and a control channel of a transmission system

Station mobile pour la détermination des facteurs d'amplification d'un canal de données et d'un canal de commande d'un système de transmission

(84) Benannte Vertragsstaaten:
**DE FR GB IT**

(30) Priorität: **19.05.2000  EP 00110730**

(43) Veröffentlichungstag der Anmeldung:
**03.11.2004  Patentblatt 2004/45**

(62) Dokumentnummer(n) der früheren Anmeldung(en) nach Art. 76 EPÜ:
**01943398.6 / 1 282 946**

(73) Patentinhaber: **SIEMENS AKTIENGESELLSCHAFT 80333 München (DE)**

(72) Erfinder: **Raaf, Bernhard 82061 Neuried (DE)**

(56) Entgegenhaltungen:
**EP-A- 0 881 786**

- **"Universal Mobile Telecommunications System (UMTS); Physical layer procedures (FDD) (3g ts 25.214 version 3.2.0 Release 1999)" ETSI TS 125 214 V3.2.0 (2000-03), März 2000 (2000-03), Seiten 1-42, XP002179166**
- **ERICSSON: "Amplitude differences between uplink DPCCH and DPDCHs" TSG-RAN WORKING GROUP 1 MEETING 4, 18. April 1999 (1999-04-18), XP002167844 Japan**

EP 1 473 849 B1

**Beschreibung**

Die Erfindung betrifft ein Verfahren zur Ermittlung der Verstärkungsfaktoren eines Datenkanals und eines Kontrollkanals eines Datenübertragungssystems, insbesondere eines Mobilfunksystems.

Aus der WO99/56410 ist ein Verfahren zur Datenübertragung mit Unterbrechungsphasen bekannt. Dieses Dokument offenbart ein Verfahren zur Datenübertragung in einem Kommunikationssystem, insbesondere in einem CDMA-Mobilfunksystem, wobei die Daten strukturiert in Rahmen übertragen werden und wobei eine Sendestation die Daten derart sendet, daß es einer die Daten empfangenden Empfangsstation möglich ist, während einer oder mehrerer Unterbrechungsphasen, in der bzw. in denen sie das Empfangen und/oder das Verarbeiten empfangener Daten unterbricht, andere Funktionen auszuführen, insbesondere über eine Empfangseinrichtung Messungen durchzuführen. Dabei werden Daten (beispielsweise Sprachdaten, Bilddaten oder Systemdaten) auf Übertragungsstrecken beispielsweise mit Hilfe von elektromagnetischen Wellen über eine Luft- oder Funkschnittstelle zwischen Sendestationen und Empfangsstationen übertragen. Die beim Senden übertragenen Daten sind dabei in Rahmen (frames), welche ihrerseits wiederum in slots untergliedert sind, strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. In Kommunikationssystemen, in denen im wesentlichen kontinuierlich zwischen einer Sendestation und einer Empfangsstation gesendet wird, muß die Empfangsstation gelegentlich auch andere Funktionen als Datenempfang ausführen, die zumindest beim Betrieb nur einer einzigen Empfangseinrichtung nicht gleichzeitig ausgeführt werden können. Insbesondere muss die Mobilstation in einem zellular aufgebauten mobilen Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt. Um ohne Unterbrechung von der Basisstation zu der Mobilstation senden zu können, ist es daraus bekannt, daß die Sendestation das Senden zu vorgegebenen Zeiten unterbricht, um es der Empfangstation zu ermöglichen, eine Nachbarkanalsuche über ihre einzige Empfangseinrichtung durchzuführen. Um einen Datenverlust zu vermeiden, sendet die Basisstation (Sendestation) die Daten zuvor oder danach - in einem so genannten Komprimiermodus - mit einer höheren Senderate als mit der im wesentlichen konstanten Dauer-Senderate im so genannten Normalmodus. Damit dies nicht zu höheren Bitfehlerraten (BER) führt, kann zusätzlich während dieser Zeit die Sendeleistung erhöht werden.

Auch im Uplink also für die Daten die von der Mobilstation zur Basisstation gesendet werden, muss in ähnlicher Weise eine solche Unterbrechungsphase zu vorgegebenen Zeiten eingefügt werden, insbesondere wenn die Mobilstation nur mit einem Synthesizer ausgerüstet ist, welcher sowohl für die Generierung der Empfangs- als auch der Sende- Frequenz eingesetzt wird. Um einen Datenverlust zu vermeiden, sendet dann auch die Mobilstation (Sendestation) die Daten zuvor oder danach - im so genannten Komprimiermodus - mit einer höheren Senderate als mit der im wesentlichen konstanten Dauer-Senderate im sogenannten Normalmodus. Damit dies nicht zu höheren Bitfehlerraten (BER) führt, kann zusätzlich während dieser Zeit die Sendeleistung erhöht werden.

Aus "3rd Generation Partnership Project; Technical Specification Group Radio Access Network; Physical layer procedures (FDD), 3G TS 25.214 V3.2.0 (2000-03) (Release 1999), insbesondere Absatz 5.1.2.5" ist folgendes Verfahren zur Ermittlung der Verstärkungsfaktoren eines Datenkanals DPDCH (Dedicated Physical Data Channel) und eines Kontrollkanals DPCCH (Dedicated Physical Control Channel) bekannt. Datenkanäle und Kontrollkanäle basieren dabei auf einer Abbildung physikalischer Übertragungsressourcen auf logische Kanäle durch an sich bekannte Multiplexverfahren, wie beispielsweise TDMA, FDMA oder CDMA. Zur Beschreibung der über die Datenkanale übertragenen Dienste bzw. Daten sind sogenannte Transport Format Combinations TFC vorgesehen, welche die Art der über den entsprechenden Datenkanal und somit die dafür erforderliche Datenrate; das dafür vorgesehene Codierverfahren und/oder die dafür erforderliche Übertragungsqualität angibt. Zur Erfüllung dieser Anforderungen erfolgt in einer Mobilstation eine entsprechende Anpassung der Verstärkungsfaktoren $\beta_c$ (Verstärkungsfaktor für Kontrollkanal) und $\beta_d$ (Verstärkungsfaktor für Datenkanal) an die jeweiligen TFCs. Die Leistung des Kontrollkanals wird dabei durch Leistungseinstellinformationen so geregelt, dass die Empfangsleistung an der Basisstation trotz variierender Kanaleigenschaften konstant bleibt. Die Leistung des Datenkanals wird den Anforderungen der verschiedenen TFCs angepasst; dies geschieht dadurch, dass das Amplitudenverhältnis zwischen Daten und Kontrollkanal durch das Verhältnis der Verstärkungsfaktoren, also durch $\beta_d / \beta_c$ gegeben ist. Die Verstärkungsfaktoren sind dabei so definiert, dass sie sich durch eine begrenzte Anzahl von Bits darstellen lassen. In der Signalverarbeitung wird der Signalstrom für den Daten- und Kontrollkanal typischerweise mit diesen Verstärkungsfaktoren multipliziert und dadurch das Verstärkungsverhältnis realisiert. Durch die Beschränkung auf eine geringe Bitanzahl kann dieser Multiplikator kostengünstig implementiert werden. Diese Verstärkungsfaktoren können somit auch als Amplitudenverstärkungsfaktoren aufgefasst werden. Dieses Vorgehen hat andererseits den Nachteil, dass die Leistung nur mit einer gewissen Quantisierung, die aus der Bitbreite folgt eingestellt werden kann.

Im Normalmodus sind folgende zwei Verfahren zur Steuerung der Verstärkungsfaktoren des Datenkanals (DPDCH) und des Kontrollkanals (DPCCH) vorgesehen:

- $\beta_c$ und $\beta_d$ werden der Mobilstation für den jeweiligen TFC signalisiert, oder

- $\beta_c$ und $\beta_d$ werden in der Mobilstation für den jeweiligen TFC basierend auf signalisierten Referenz-Verstärkungsfaktoren welche für einen anderen TFC direkt gelten berechnet.

Falls die Verstärkungsfaktoren $\beta_c$ and $\beta_d$ signalisiert werden, so werden diese signalisierten Verstärkungsfaktoren im Normalmodus direkt für die Einstellung des Amplitudenverhältnisses zwischen dem DPCCH und den DPDCHs verwendet.

Falls die Verstärkungsfaktoren $\beta_c$ and $\beta_d$ im Normalmodus für bestimmte TFCs aus signalisierten Referenz-Verstärkungsfaktoren berechnet werden, so wird durch folgende Beziehung ein Nominalverhältnis $A_j$ berechnet:

$$A_j = \frac{\beta_{d,ref}}{\beta_{c,ref}} \cdot \sqrt{\frac{L_{ref}}{L_j}} \sqrt{\frac{K_j}{K_{ref}}} \;,$$

wobei

$\beta_{c,ref}$, $\beta_{d,ref}$: signalisierte Referenz-Verstärkungsfaktoren für Referenz-TFC;
$\beta_{c,j}$, $\beta_{d,j}$: Verstärkungsfaktoren für j-ten TFC;
$L_{ref}$: Anzahl der für den Referenz-TFC benützten DPDCHs;
$L_j$: Anzahl der für den *j-te* TFC benützten DPDCHs;
$K_{ref}$: Maß für den Leistungsbedarf pro DPDCH des Referenz-TFCs, welches im Wesentlichen die Datenraten; Codierungsgewinne und Übertragungsqualitätsanforderungen der in dem relevanten TFC gemeinsam übertragenen Datenströme berücksichtigt;
$K_j$: Maß für Leistungsbedarf pro DPDCH des j-ten TFCs, welches im Wesentlichen die Datenraten, Codierungsgewinne, und Übertragungsqualitätsanforderungen der in dem relevanten TFC gemeinsam übertragenen Datenströme berücksichtigt.

Die konkrete Berechnung der Größen $K_{ref}$ und $K_j$ ist dabei ebenfalls in der genannten Spezifikation "3rd Generation Partnership Project; Technical Specification Group Radio Access Network; Physical layer procedures (FDD), 3G TS 25.214 V3.2.0 (2000-03) (Release 1999), insbesondere Absatz 5.1.2.5.3

Computed gain factors" beschrieben. Dabei wird der Einfluss der Codierungsgewinne, und Übertragungsqualitätsanforderungen eines einzelnen Datenstrom Nr. *i* der in dem relevanten TFC gemeinsam übertragenen Datenströme durch einen Parameter $RM_i$, das sogenannte Semi-statische Ratenanpassungs-Attribut (semi-static rate matching attribute) ausgedrückt. Dieser Parameter wird typischerweise für jeden Datenstrom signalisiert.

Daraus ergeben sich durch Rundung gemäß folgender Beziehungen die Verstärkungsfaktoren für den *j-ten* TFC:

- Wenn $A_j > 1$, dann $\beta_{d,j} = 1.0$ und $\beta_{c,j} = \lfloor 1/A_j \rfloor$, wobei $\lfloor \bullet \rfloor$ Rundung auf den nächst niedrigeren quantisierten Verstärkungsfaktor bedeutet. Da $\beta_{c,j}$ nicht auf Null gesetzt werden darf, soll $\beta_{c,j}$ auf das niedrigste quantisierte Amplitudenverhältnis 0.0667 gesetzt werden, wie in TS 25.213 der oben angegebenen Quelle spezifiziert.

- Wenn $A_j \leq 1$, dann $\beta_{d,j} = \lceil A_j \rceil$ und $\beta_{c,j} = 1.0$, wobei $\lceil \bullet \rceil$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Die im Komprimiermodus verwendeten Verstärkungsfaktoren für einen TFC ergeben sich aus den Verstärkungsfaktoren, welche im Normalmodus für diesen TFC verwendet werden. Dazu wird durch folgende Beziehung ein korrigiertes Nominalverhältnis $A_{C,j}$ berechnet:

$$A_{C,j} = \frac{\beta_{d,j}}{\beta_{c,j}} \cdot \sqrt{\frac{15 \cdot N_{pilot,C}}{N_{slots,C} \cdot N_{pilot,N}}} \;;$$

wobei gilt:

$\beta_{c,j}$ und $\beta_{d,j}$: Verstärkungsfaktoren für den *j-ten* TFC im Normalmodus (wie oben beschrieben signalisiert oder berechnet);
$N_{pilot,C}$: Anzahl der pilot bits pro slot im Komprimiermodus;
$N_{pilot,N}$: Anzahl der pilot bits per slot Normalmodus;
$N_{slots,C}$: Anzahl der für die Übertragung der Daten verwendeten slots im komprimierten Rahmen.
$\beta_{c,C,j}$ und $\beta_{d,C,j}$, die Verstärkungsfaktoren für den *j-te* TFC im Komprimiermodus, ergeben sich dann durch Rundung gemäß folgender Regeln:

Wenn $A_{Cj} > 1$, dann $\beta_{d,C,j} = 1.0$ und $\beta_{c,C,j} = \lfloor 1/A_{C,j} \rfloor$, wobei $\lfloor \bullet \rfloor$ Rundung auf den nächst niedrigeren quantisierten Verstärkungsfaktor bedeutet. Da $\beta_{c,C,j}$ nicht auf Null gesetzt werden darf, soll $\beta_{c,C,j}$ falls obige Rundung den Wert 0 ergeben würde auf das niedrigste quantisierten Verstärkungsfaktor 0.0667 gesetzt werden, wie in TS 25.213 der oben angegebenen Quelle spezifiziert.

Wenn $A_{Cj} \leq 1$, dann $\beta_{d,C,j} = \lceil A_{C,j} \rceil$ und $\beta_{c,C,j} = 1.0$, wobei $\lceil \cdot \rceil$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Der Nachteil dieses bekannten Verfahrens zur Berechnung des Verstärkungsfaktors im Komprimiermodus aus berechneten Verstärkungsfaktoren im Normalmodus liegt darin, daß durch die dabei durchgeführte zweifache Rundung erstens ein hoher Berechnungsaufwand entsteht und zweitens das Endergebnis eien relativ großen Fehler aufweist.

Der Erfindung liegt daher die Aufgabe zugrunde, ein gegenüber dem Stand der Technik genaueres und aufwandsgünstigeres Verfahren zur Ermittlung der Verstärkungsfaktoren eines Datenkanals und eines Kontrollkanals eines Datenübertragungssystems anzugeben.

Diese Aufgabe wird durch die Merkmale der unabhängigen Ansprüche gelöst. Vorteilhafte und zweckmäßige Weiterbildungen ergeben sich aus den abhängigen Ansprüchen, welche in Kombination mit jedem der unabhängigen Ansprüche im Rahmen der Erfindung liegen.

Erfindungsgemäß wird also im Komprimiermodus aus dem Nominalverhältnis ($A_j$) (anstatt wie im Stand der Technik aus den im Normalmodus verwendeten Verstärkungsfaktoren) ein korrigiertes Nominalverhältnis ($A_{C,j}$) berechnet und daraus mittels Rundung Verstärkungsfaktoren ($\beta_{c,C,j}$, $\beta_{d,C,j}$) bestimmt. Je nach Wertebereich der Verstärkungsfaktoren ist statt "Rundung" auch der Begriff "Diskretisierung" oder dung" auch der Begriff "Diskretisierung" oder "Quantisierung" angebracht bzw. passender.

Die Erfindung beruht demnach auf dem Gedanken, den der Rundung oder Quantisierung der Verstärkungsfaktoren resultierenden Nachteil einer ungenauen Leistungseinstellung möglichst gering zu halten, indem die unvermeidliche Rundung oder Quantisierung derart, insbesondere an einer Stelle des Gesamtverfahrens, durchgeführt wird, dass eibne möglichst geringe Ungenauigkeit erreicht wird.

Die Erfindung kann dabei insbesondere dann angewendet werden, wenn im Normalmodus Referenz-Verstärkungsfaktoren statt Verstärkungsfaktoren signalisiert bzw. verwendet werden; bei der Signalisierung bzw. Verwendung von Verstärkungsfaktoren im Normalmodus basieren vorteilhafterweise auch die Verstärkungsfaktoren im Komprimiermodus auf diesen signalisierten Verstärkungsfaktoren.

Dadurch wird statt der aufeinanderfolgenden zwei Rundungsoperationen, wie es im Stand der Technik vorgesehen ist, zur Ermittlung eines Verstärkungsfaktors im Komprimiermodus nur eine Rundungsoperation durchgeführt, wodurch die erforderliche Rechenkomplexität verringert wird und die berechneten Verstärkungsfaktoren in der Regel eine höhere Genauigkeit aufweisen.

Eine bevorzugte Ausführung der Erfindung sieht vor, dass im Normalmodus entweder eine Signalisierung oder eine Berechnung, welche insbesondere eine Rundungsoperation umfaßt, der Verstärkungsfaktoren eines Datenkanals und/oder eines Kontrollkanals erfolgt. Falls im Normalmodus beispielsweise ein signalisierter Verstärkungsfaktor ($\beta_{c,j}$, $\beta_{d,j}$) verwendet wird, so ergibt sich auch der entsprechende Verstärkungsfaktor ($\beta_{c,C,j}$, $\beta_{d,C,j}$) im Komprimiermodus aus den signalisierten Verstärkungsfaktoren ($\beta_{c,j}$, $\beta_{d,j}$) durch eine Korrekturberechnung. Falls aber im Normalmodus berechnete Verstärkungsfaktoren ($\beta_{c,j}$, $\beta_{d,j}$) verwendet werden, so ergibt sich der entsprechende Verstärkungsfaktor ($\beta_{c,C,j}$, $\beta_{d,C,j}$) im Komprimiermodus nicht aus diesen berechneten Verstärkungsfaktoren durch eine Korrekturberechnung, sondern aus einem berechneten Nominalverhältnis ($A_j$), insbesondere durch eine Korrekturberechnung des Nominalverhältnis ($A_j$) mit anschließender Rundung des sich aus dieser Korrektur ergebenden korrigierten Nominalverhältnisses ($A_{C,j}$). Das Nominalverhältnis ($A_j$) wird dabei insbesondere aus signalisierten Referenz-Verstärkungsfaktoren berechnet.

Die Erfindung wird im Folgenden anhand eines bevorzugten Ausführungsbeispiels näher beschrieben.

Falls die Verstärkungsfaktoren $\beta_c$ und $\beta_d$ im Normalmodus signalisiert werden, so erfolgt deren Bestimmung im Komprimiermodus gemäß dem Stand der Technik.

Falls für bestimmte TFCs die Verstärkungsfaktoren im Normalmodus aus dem Nominalverhältnis $A_j$

durch die Beziehung $A_j = \dfrac{\beta_{d,ref}}{\beta_{c,ref}} \cdot \sqrt{\dfrac{L_{ref}}{L_j}} \sqrt{\dfrac{K_j}{K_{ref}}}$ und anschließende Rundung berechnet werden (siehe oben), so werden - anders als im Stand der Technik - im Komprimiermodus die Verstärkungsfaktoren nicht aus den Verstärkungsfaktoren des Normalmodus ermittelt, sondern in Abhängigkeit von dem im Normalmodus ermittelten Nominalverhältnis $A_j$ ermittelt. Im Komprimiermodus bestimmen sich dann die Verstärkungsfaktoren $\beta_{c,C,j}$ und $\beta_{d,C,j}$ nicht aus den gerundeten Verstärkungsfaktoren des Normalmodus sondern aus einem korrigierten Nominalverhältnis $A_{C,j}$:

$$A_{C,J} = A_J \cdot \sqrt{\frac{15 \cdot N_{pilot,C}}{N_{slots,C} \cdot N_{pilot,N}}} \; ;$$

wobei gilt:

$A_j$ : Nominalverhältnis im Normalmodus;

$N_{pilot,C}$ : Anzahl der pilot bits pro slot im Komprimiermodus;

$N_{pilot,N}$ : Anzahl der pilot bits per slot Normalmodus;

$N_{slots,C}$ : Anzahl der für die Übertragung der Daten verwendeten slots im komprimierten Rahmen.

$\beta_{c,C,j}$ und $\beta_{d,C,j}$, die Verstärkungsfaktoren für den $j$-te TFC im Komprimiermodus, ergeben sich dann durch Rundung gemäß folgender Regeln:

Wenn $A_{C,j} > 1$, dann $\beta_{d,c,j} = 1.0$ und $\beta_{c,C,j} = \lfloor 1/A_{C,j} \rfloor$, wobei $\lfloor \cdot \rfloor$ Rundung auf den nächst niedrigeren quantisierten Verstärkungsfaktor bedeutet. Da $\beta_{c,C,j}$ nicht auf Null gesetzt werden darf, soll $\beta_{c,C,j}$ auf das niedrigste quantisierte Amplitudenverhältnis 0.0667 gesetzt werden, wie in TS 25.213 der oben angegebenen Quelle spezifiziert.

Wenn $A_{Cj} \leq 1$, dann $\beta_{d,C,j} = \lceil A_{C,j} \rceil$ und $\beta_{c,C,j} = 1.0$, wobei $\lceil \cdot \rceil$ Rundung auf den nächst höheren quantisierten Verstärkungsfaktor bedeutet.

Die quantisierten Verstärkungsfaktoren sind in "3rd Generation Partnership Project; Technical Specification Group Radio Access Network; Spreading and Modulation (FDD), 3G TS 25.213 V3.2.0 (2000-03) (Release 1999), Absatz 4.2.1, Tabelle 1" spezifiziert.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können.

## Patentansprüche

1. Mobilstation,
die zur Ermittlung der Verstärkungsfaktoren eines Datenkanals und eines Kontrollkanals eines Datenübertragungssystems, bei dem die Datenübertragung in einem Normalmodus oder einem Komprimiermodus erfolgt, derart eingerichtet ist,

- dass im Normalmodus aus signalisierten Referenz-Verstärkungsfaktoren für eine Referenz-Transport Format Combination TFC ein Nominalverhältnis berechnet wird, und daraus mittels Rundung Verstärkungsfaktoren für eine j-te TFC bestimmt werden, und
- dass im Komprimiermodus aus dem Nominalverhältnis ein korrigiertes Nominalverhältnis berechnet wird, und daraus mittels Rundung oder Diskretisierung gerundete oder diskretisierte Verstärkungsfaktoren bestimmt werden.

## Claims

1. Mobile station which, in order to determine the amplification factors of a data channel and of a control channel of a data transmission system, in which the data transmission is performed in a normal mode or a compression mode, is set up in such a way

- that a nominal ratio is calculated in the normal mode from signalled reference amplification factors for a Reference Transport Format Combination TFC, and amplification factors for a *jth* TFC are determined therefrom by means of rounding, and
- that a corrected nominal ratio is calculated from the nominal ratio in the compression mode, and rounded or discretized amplification factors are determined therefrom by means of rounding or discretization.

## Revendications

1. Station mobile
qui, pour la détermination des facteurs d'amplification d'un canal de données et d'un canal de contrôle d'un système de transmission de données dans lequel la transmission de données s'effectue dans un mode normal ou dans un mode comprimé, est conçue de telle sorte que

- dans le mode normal, un rapport nominal est calculé à partir des facteurs d'amplification de référence signalés pour une combinaison de format de transport de référence TFC et des facteurs d'amplification sont déterminés à partir de là au moyen d'un calcul d'arrondi pour une j-ème TFC, et
- dans le mode comprimé, un rapport nominal corrigé est calculé à partir du rapport nominal et des facteurs d'amplification arrondis ou discrétisés sont déterminés à partir de là au moyen d'un calcul d'arrondi ou d'une discrétisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9956410 A